(19) Europäisches Patentamt
European Patent Office
Office européen des brevets

(11) **EP 4 279 519 A1**

(12) **EUROPEAN PATENT APPLICATION**

(43) Date of publication:
**22.11.2023 Bulletin 2023/47**

(21) Application number: **22174393.3**

(22) Date of filing: **19.05.2022**

(51) International Patent Classification (IPC):
*C08G 18/02* (2006.01)        *C08G 18/28* (2006.01)
*C08G 18/70* (2006.01)        *C08G 18/73* (2006.01)
*C08G 18/79* (2006.01)        *C09D 175/04* (2006.01)
*C08G 18/62* (2006.01)

(52) Cooperative Patent Classification (CPC):
**C08G 18/73; C08G 18/022; C08G 18/027;
C08G 18/283; C08G 18/62; C08G 18/706;
C08G 18/792; C08G 18/798; C09D 175/04**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventor: **The designation of the inventor has not
yet been filed**

(74) Representative: **Levpat
c/o Covestro AG
Gebäude K12
51365 Leverkusen (DE)**

(54) **A TWO-COMPONENT COATING COMPOSITION**

(57)    The present invention relates to a two-component coating composition, a coating method and use of the composition, and a product coated with the coating composition. The two-component coating composition comprises a component A and a component B, wherein the component A comprises an aqueous hydroxyl-containing polyacrylic dispersion, the component B comprises a polyether-modified polyisocyanate, wherein the composition has a molar ratio of isocyanate groups and hydroxyl groups of 1.2:1 to 2:1; wherein the aqueous hydroxyl-containing polyacrylic dispersion has a hydroxyl content of greater than 2% by weight, relative to the total weight of solids of the aqueous hydroxyl-containing polyacrylic dispersion, and wherein the aqueous hydroxyl-containing polyacrylic dispersion has a weight-average molecular weight of not higher than 450000. The two-component coating composition provided by the present invention has a matte effect and is easy to clean.

EP 4 279 519 A1

## Description

### Technical field

The present invention relates to a two-component coating composition, a coating method and use of the coating composition, and a product coated with the coating composition.

### Prior art

On a global scale, damage caused by malicious graffiti on many public facilities, such as urban underpasses, culverts, and outer walls of buildings, have attracted more and more attention. It not only seriously affects the city appearance and landscape, but also requires a lot of manpower and material resources to remove such malicious graffiti. Easy-to-clean coatings can create a barrier between the surface to be protected and the graffiti, making it difficult to scribble or easy to be removed. In addition, there is a need for an easy-to-clean coating that can prevent graffiti from contaminating the interior walls in view of the improvement of people's furnishing requirements for interior wall decoration, especially for walls of some functional rooms such as children's rooms, kitchens, dining rooms, etc.

At present, the commonly used easy-to-clean coatings on the market mainly include fluororesin coatings, aqueous coatings of cross-linked fluorine compounds, polyurethane coatings and silicone-modified coatings.

CN101585995A discloses a silicone-modified two-component coating based on acrylic resin, comprising a component A and a component B, wherein the component A comprises a hydroxy acrylic resin, a fluorocarbon resin, a modified polydimethylsiloxane resin, a polyacrylate-modified silicone resin, a smoothing agent, a leveling agent, a defoamer, a drier, dibutyltin dilaurate, butyl acetate and xylene; wherein the component B comprises hexamethylene diisocyanate biuret, butyl acetate and ethylene glycol ethyl ether acetate.

US7501472B2 discloses an aqueous fluororesin system for one- or two-component antigraffiti and anti-soiling coatings, which is prepared by (a) preparing a dispersion of hydroxy-and/or amino-functional oligourethanes and/or polyurethanes, and (b) optionally subsequently reacting it with a crosslinker component.

CN111057456A discloses a method for preparing an aqueous two-component polyurethane easy-cleaning coating. The component A is an aqueous resin, such as an aqueous hydroxy polyacrylic dispersion, and the component B is an aqueous polyurethane curing agent.

### Summary of invention

The object of the present invention is to provide a two-component coating composition, a coating method and use of the coating composition, and a product coated with the coating composition.

The two-component coating composition according to the present invention comprises a component A and a component B, wherein the component A comprises an aqueous hydroxyl-containing polyacrylic dispersion, the component B comprises a polyether-modified polyisocyanate, wherein the composition has a molar ratio of isocyanate groups and hydroxyl groups of 1.2:1 to 2:1; wherein the aqueous hydroxyl-containing polyacrylic dispersion has a hydroxyl content of greater than 2% by weight, relative to the total weight of solids of the aqueous hydroxyl-containing polyacrylic dispersion, and wherein the aqueous hydroxyl-containing polyacrylic dispersion has a weight-average molecular weight of not higher than 450000; wherein the polyether-modified polyisocyanate is obtained by the reaction of a system comprising the following components:

   a) a polyisocyanate with an isocyanate functionality of 2 to 4.5, comprising at least 30% by weight of hexamethylene diisocyanate trimer, pentamethylene diisocyanate trimer or a combination thereof;
   b) a polyoxyalkylene monoether alcohol; and
   c) optionally a catalyst;

wherein the polyoxyalkylene monoether alcohol has a number-average molecular weight of 250 g/mol to 700 g/mol, and an oxyethylene group content of 75% by weight to 100% by weight, relative to the total weight of oxyalkylene groups of the polyoxyalkylene monoether alcohol; wherein the polyether-modified polyisocyanate has the following characteristics:

   i) an average isocyanate functionality of 1.8 to 4.1;
   ii) an isocyanate group content of 8% by weight to 21% by weight, relative to the total weight of the polyisocyanate; and
   iii) a number-average molecular weight of 500 g/mol to 1200 g/mol;

wherein the component B has an amount of polyoxyalkylene monoether structure of greater than 6.5% by weight and less than 12% by weight, relative to the total weight of the component B.

One aspect of the present invention provides use of the two-component coating composition of the present invention for protecting a surface of a substrate or a coating on the surface of a substrate.

Yet another aspect of the present invention provides a coating method comprising the steps of: applying the two-component coating composition provided by the present invention onto a surface of a substrate, and then curing and drying.

Yet another aspect of the present invention provides a coated product comprising a substrate and a coating formed by applying the two-component coating composition provided by the present invention onto the substrate and then curing and drying.

Embodiments

The present invention provides a two-component coating composition comprising a component A and a component B, wherein the component A comprises an aqueous hydroxyl-containing polyacrylic dispersion, the component B comprises a polyether-modified polyisocyanate, wherein the composition has a molar ratio of isocyanate groups and hydroxyl groups of 1.2:1 to 2:1; wherein the aqueous hydroxyl-containing polyacrylic dispersion has a hydroxyl content of greater than 2% by weight, relative to the total weight of solids of the aqueous hydroxyl-containing polyacrylic dispersion, and wherein the aqueous hydroxyl-containing polyacrylic dispersion has a weight-average molecular weight of not higher than 450000; wherein the polyether-modified polyisocyanate is obtained by the reaction of a system comprising the following components: a) a polyisocyanate with an isocyanate functionality of 2 to 4.5, comprising at least 30% by weight of hexamethylene diisocyanate trimer, pentamethylene diisocyanate trimer or a combination thereof; b) a polyoxyalkylene monoether alcohol; and c) optionally a catalyst; wherein the polyoxyalkylene monoether alcohol has a number-average molecular weight of 250 g/mol to 700 g/mol, and an oxyethylene group content of 75% by weight to 100% by weight, relative to the total weight of oxyalkylene groups of the polyoxyalkylene monoether alcohol; wherein the polyether-modified polyisocyanate has the following characteristics: i) an average isocyanate functionality of 1.8 to 4.1; ii) an isocyanate group content of 8% by weight to 21% by weight, relative to the total weight of the polyisocyanate; and iii) a number-average molecular weight of 500 g/mol to 1200 g/mol; wherein the component B has an amount of polyoxyalkylene monoether structure of greater than 6.5% by weight and less than 12% by weight, relative to the total weight of the component B. The present invention also provides a coating method and use of the two-component coating composition, and a product obtained by coating with the coating composition.

Two-component coating composition

As for the two-component coating compositions as described herein, the term two-component refers to a coating composition comprising at least two components, which must be stored in separate containers due to their mutual reactivity. When the two separate components are mixed and applied onto a substrate, the mutually reactive compounds in the two components react to crosslink and form a cured coating.

As used herein, the term "curing and drying" refers to a process by which a liquid coating composition transforms from a liquid state to a solidified state. As used herein, the term "trimer" refers to pure trimers, or mixtures of a trimer and a higher homolog thereof containing more than one isocyanurate ring. The solids of the dispersion of the present invention refer to the solid ingredients of the dispersion or the effective ingredients of the dispersion.

The two-component coating composition has a molar ratio of isocyanate groups and hydroxyl groups of preferably 1.3:1 to 1.7:1. The two-component coating composition is preferably aqueous.

Component A

The aqueous hydroxyl-containing polyacrylic dispersion has a hydroxyl content of preferably greater than 2% by weight and not greater than 5% by weight, most preferably 2.5% by weight to 5% by weight, relative to the total weight of solids of the aqueous hydroxyl-containing polyacrylic dispersion.

The aqueous hydroxyl-containing polyacrylic dispersion has a weight-average molecular weight of preferably not higher than 450000, more preferably 30000 to 450000, most preferably 30000 to 350000, the weight-average molecular weight being determined according to GB/T 21863-2008 by gel permeation chromatography using DMF as the mobile phase and against polystyrene standard.

The aqueous hydroxyl-containing polyacrylic dispersion has an amount of solids of preferably 35% by weight to 50% by weight, most preferably 39% by weight to 46% by weight, relative to the total weight of the aqueous hydroxyl-containing polyacrylic dispersion.

Component B

The component B has an amount of polyoxyalkylene monoether structure of preferably 7% by weight to 11% by weight, most preferably 8% by weight to 11% by weight, relative to the total weight of the component B.

The component B preferably further has the following characteristics:

an average isocyanate functionality of 1.8 to 4.1;
an isocyanate group content of 8% by weight to 21% by weight, relative to the total weight of the component B; and
a number-average molecular weight of 500 g/mol to 1200 g/mol.

The number-average molecular weight of the component B is determined according to DIN 55672-1:2016-03 at 23°C by gel permeation chromatography using tetrahydrofuran as the mobile phase and against polystyrene standard.

The component B has a content of isophorone diisocyanate trimer of preferably not more than 0.5% by weight, relative to the total weight of the component B.

The component B has an average isocyanate functionality of most preferably 2.0 to 4.0.

The component B has an isocyanate group content of preferably 10 % by weight to 21% by weight, most preferably 1.5 % by weight to 21% by weight, relative to the total weight of the component B.

When the component B in the present invention comprises a catalyst, an auxiliary agent, an additive, etc., the total weight of the component B for calculating the isocyanate group content, the amount of isophorone diisocyanate trimer and the amount of polyoxyalkylene monoether structure is the total weight of the components containing NCO groups in the component B, while the components in the component B comprising no NCO groups, such as the catalyst, the auxiliary agent, the additive, etc, are not included in the total weight of the component B.

Polyether-modified polyisocyanate

The polyether-modified polyisocyanate of the present invention may be present in the form of a mixture, which may contain unreacted components in the system.

The polyether-modified polyisocyanate of the present invention is transparent and almost colorless.

The polyether-modified polyisocyanate has an average isocyanate functionality of preferably 2.0 to 4.0, most preferably 2.5 to 3.5.

The polyether-modified polyisocyanate has an isocyanate group content of preferably 10% by weight to 21% by weight, most preferably 15% by weight to 21% by weight, relative to the total weight of the polyether-modified polyisocyanate.

The polyether-modified polyisocyanate has a number-average molecular weight of preferably 700 g/mol to 1000 g/mol.

The polyether-modified polyisocyanate has a viscosity of preferably 500 mPa·s to 3500 mPa·s.

The polyether-modified polyisocyanate has an amount of polyoxyalkylene monoether structure of preferably greater than 6.5% by weight and less than 12% by weight, more preferably 7% by weight to 11% by weight, most preferably 8% by weight to 11% by weight, relative to the total weight of the polyether-modified polyisocyanate.

The polyether-modified polyisocyanate has a content of isophorone diisocyanate trimer of preferably not more than 0.5% by weight, relative to the total weight of the polyether-modified polyisocyanate.

Most preferably, the polyether-modified polyisocyanate is free of isophorone diisocyanate trimer.

The polyether-modified polyisocyanate is in an amount of preferably 88% by weight to 93.5% by weight, based on the total weight of the component B.

The polyether-modified polyisocyanate has a color value of preferably lower than 120, most preferably lower than 30.

The polyether-modified polyisocyanate is preferably an aliphatic polyisocyanate composition, an alicyclic polyisocyanate composition or a combination thereof.

The average isocyanate functionality of the polyether-modified polyisocyanate is calculated according to the following formula: wherein,

$$F = \frac{(\sum equiv\,NCO - \sum equiv\,OH)}{\sum\left(\frac{equiv\,NCO}{f_{NCO}}\right) + \Sigma mol\,OH - \Sigma equiv\,OH}$$

F: the average isocyanate functionality of the polyether-modified polyisocyanate;

Σ Equiv NCO: equivalent sum of isocyanate functional groups in the polyisocyanate with an isocyanate functionality of 2 to 4.5 of the component a) ;

Σ Equiv OH: equivalent sum of hydroxyl groups in the polyoxyalkylene monoether alcohol of the component b);

$f_{NCO}$: isocyanate functionality of the polyisocyanate with an isocyanate functionality of 2 to 4.5 in the component a) of the system, calculated from the isocyanate group content of the polyisocyanate and the molecular weight of the polyisocyanate, the molecular weight being determined by gel penetration chromatography (GPC);

Σ mol OH: mole sum of hydroxyl functional groups in the polyoxyalkylene monoether alcohol of the component b).

The system has an equivalent ratio of isocyanate groups to hydroxyl groups of preferably 5:1 to 110:1.

Component a) polyisocyanate with an isocyanate functionality of 2 to 4.5

The polyisocyanate with an isocyanate functionality of 2 to 4.5 has an isocyanate functionality of preferably 2.5 to 4.4, more preferably 2.5 to 4, and most preferably 3 to 4.

The polyisocyanate with an isocyanate functionality of 2 to 4.5 has a viscosity of preferably 500 mPa·s to 4000 mPa·s.

The polyisocyanate with an isocyanate functionality of 2 to 4.5 has an isocyanate group content of preferably 15% by weight to 25% by weight, most preferably 16% by weight to 24% by weight, based on the amount of the component a) polyisocyanate with an isocyanate functionality of 2 to 4.5 being 100% by weight.

The polyisocyanate with an isocyanate functionality of 2 to 4.5 comprises one or more of the following: hexamethylene diisocyanate trimer and pentamethylene diisocyanate trimer. The amount of the hexamethylene diisocyanate trimer, the pentamethylene diisocyanate trimer or a combination thereof is at least 30% by weight, preferably 35% by weight to 100% by weight, more preferably 40% by weight to 100% by weight, more preferably 50% by weight to 100% by weight, most preferably 65% by weight to 100% by weight, relative to the total weight of the polyisocyanate with an isocyanate functionality of 2 to 4.5.

Preferably, the component a) polyisocyanate with an isocyanate functionality of 2 to 4.5 further comprise an additional isocyanate.

The amount of the additional isocyanates is preferably not more than 70% by weight, more preferably not more than 60% by weight, more preferably not more than 50% by weight, most preferably not more than 35% by weight, relative to the total weight of the component a) polyisocyanate with an isocyanate functionality of 2 to 4.5.

The additional isocyanate is preferably one or more of the following: aliphatic polyisocyanates and alicyclic polyisocyanates, more preferably aliphatic polyisocyanates, and further preferably one or more of the following: aliphatic isocyanate uretdiones and aliphatic isocyanate biurets, more preferably one or more of the following: hexamethylene diisocyanate uretdione, hexamethylene diisocyanate biuret and pentamethylene diisocyanate uretdione, most preferably one or more of the following: hexamethylene diisocyanate uretdione and hexamethylene diisocyanate biuret.

The amount of the hexamethylene diisocyanate uretdione and/or the hexamethylene diisocyanate biuret is preferably not more than 65% by weight, more preferably not more than 60% by weight, more preferably not more than 50% by weight, most preferably not more than 35% by weight, relative to the total weight of the component a) polyisocyanate with an isocyanate functionality of 2 to 4.5.

When the system comprises two or more polyisocyanates, the isocyanate functionality of the polyisocyanates refers to the average isocyanate functionality of the two or more polyisocyanates.

The amount of the polyisocyanate with an isocyanate functionality of 2 to 4.5 is preferably greater than 30% by weight, most preferably greater than 50% by weight, relative to the total weight of the system.

Component b) polyoxyalkylene monoether alcohol

The component b) polyoxyalkylene monoether alcohol has a number-average molecular weight of preferably 250 g/mol to 600 g/mol, more preferably 250 g/mol-500 g/mol, most preferably 250 g/mol to 400 g/mol.

The component b) polyoxyalkylene monoether alcohol has an oxyethylene group content of preferably 80% by weight to 100% by weight, most preferably 90% by weight to 100% by weight, relative to the total weight of oxyalkylene groups of the polyoxyalkylene monoether alcohol.

The component b) polyoxyalkylene monoether alcohol is preferably a polyethylene glycol monomethyl ether containing 5 to 14 ethylene oxide units on average, more preferably a polyethylene glycol monomethyl ether containing 5 to 12 ethylene oxide units on average, most preferably a polyethylene glycol monomethyl ether containing 5 to 9 ethylene oxide units on average.

The polyoxyalkylene monoether alcohol can be obtained by known methods. The preferred starting components include a monohydric alcohol, a secondary monoamine and an oxyalkylene compound. The monohydric alcohol and the secondary monoamine are present either alternatively or simultaneously.

The monohydric alcohol is preferably a monohydric alcohol having a molecular weight of 30 g/mol to 150 g/mol, such as the monohydric alcohol used according to EPA-206059, most preferably one or more of the following: methanol and butanol.

The secondary monoamine is preferably one or more of the following: dimethylamine and diethylamine.

The oxyalkylene compound preferably comprises 75 % by weight to 100% by weight, further preferably 80 % by weight to 100% by weight, most preferably 90 % by weight to 100% by weight of ethylene oxide, relative to the total weight of the oxyalkylene compound.

The oxyalkylene compound may further comprise propylene monoxide in an amount of preferably not more than 25% by weight, more preferably not more than 20% by weight, most preferably not more than 10% by weight, relative to the total weight of the oxyalkylene compound.

The starting components are preferably reacted at 40 °C to 150 °C, most preferably 60 °C to 130 °C.

The starting components have an equivalent ratio of NCO/OH of preferably 5:1 to 110:1, most preferably 8:1 to 90:1. The starting components preferably react continuously until the theoretically calculated isocyanate content is reached.

The component b) polyoxyalkylene monoether alcohol has a hydroxyl value of preferably 93 mgKOH/g to 224 mgKOH/g, the hydroxyl value being determined according to ASTM D4274.

When the system comprises two or more polyoxyalkylene monoether alcohols, the number-average molecular weight of the polyoxyalkylene monoether alcohols refers to the number-average molecular weight of the two or more polyoxyalkylene monoether alcohols on average. The oxyethylene group content of the polyoxyalkylene monoether alcohols refers to the average oxyethylene group content of the two or more polyoxyalkylene monoether alcohols, that is, the average value of oxyethylene group contents of the two or more polyoxyalkylene monoether alcohols.

The oxyethylene group content of the polyoxyalkylene monoether alcohol is calculated as follows:

$$EO = \frac{\Sigma(b*EO\%wt)}{\Sigma b}$$

wherein,

$\Sigma$ (b*EO%wt) stands for the weight sum of oxyethylene groups of each polyoxyalkylene monoether alcohol
$\Sigma$ b stands for the total weight of the polyoxyalkylene monoether alcohol.

When the system comprises two or more polyoxyalkylene monoether alcohols, the system preferably comprises at least one polyoxyalkylene monoether alcohol satisfying the following conditions: a number-average molecular weight thereof of preferably 250 g/mol to 700 g/mol, more preferably 250 g/mol to 600 g/mol, more preferably 250 g/mol to 500 g/mol, most preferably 250 g/mol to 400 g/ mol; an oxyethylene group content thereof of preferably 75% by weight to 100% by weight, more preferably 80% by weight to 100% by weight, most preferably 90% by weight to 100% by weight, relative to the total weight of oxyalkylene groups of the polyoxyalkylene monoether alcohol.

The amount of the component b) polyoxyalkylene monoether alcohol is preferably greater than 7% by weight and less than 11% by weight, most preferably 8 % by weigh and 11% by weight, relative to the total weight of the system.

Component c) catalyst

The component c) catalyst is preferably one or more of the following: sulfonic catalysts, phosphoric catalysts, tertiary amine catalysts, tertiary phosphine catalysts, tertiary hydroxyalkylamine catalysts and metal catalysts, most preferably one or more of the following: metal catalysts and phosphoric catalysts.

The sulfonic acid catalyst is preferably one or more of the following: methanesulfonic acid, p-toluenesulfonic acid, trifluoromethanesulfonic acid, perfluorobutanesulfonic acid, dodecylbenzenesulfonic acid, methyl- and ethyl-toluenesulfonic salt.

The phosphoric acid catalyst is preferably one or more of the following: silylated acids, monoalkyl phosphates and dialkyl phosphates, more preferably one or more of the following: monobutyl phosphate, mono(tridecyl) phosphate, dibutyl phosphate, dioctyl phosphate, trimethylsilyl mesylate, trimethylsilyl triflate, tris(trimethylsilyl) phosphate and diethyl(trimethylsilyl) phosphate, most preferably one or more of the following: monobutyl phosphate and dibutyl phosphate.

The tertiary amine catalyst is preferably one or more of the following: triethylamine, tributylamine, N,N-dimethylaniline, N-ethylpiperidine and N,N'-dimethylpiperazine.

The tertiary phosphine catalyst is preferably one or more of the following: triethylphosphine, tributylphosphine and dimethylphenylphosphine.

The tertiary hydroxyalkylamine catalyst is preferably those described in GB2221465 and/or GB2222161, most preferably one or more of the following: triethanolamine, N-methyldiethanolamine, dimethylethanolamine, mixtures of a tertiary bicyclic amine (e.g., DBU) with a low-molecular-weight simple aliphatic alcohol, N-isopropyldiethanolamine and 1-(2-hydroxethyl) pyrrolidine.

The metal catalyst may be those described in DEA3240613, preferably one or more of the following: manganese octoates, iron octoates, cobalt octoates, nickel octoates, copper octoates, zinc octanoates, zirconium octanoates, cerium octanoates, lead octanoates, manganese naphthenates, iron naphthenates, cobalt naphthenates, nickel naphthenates, copper naphthenates, zinc naphthenates, zirconium naphthenates, cerium naphthenates, lead naphthenates and mixtures of the above-mentioned salts and lithium, sodium, potassium, calcium or barium acetate. The metal catalyst may also be those described in DEA 3219608, preferably one or more of the following: sodium salts of linear or branched alkane carboxylic acids having up to 10 carbon atoms and potassium salts of linear or branched alkane carboxylic acids having up to 10 carbon atoms, wherein the carboxylic acid is preferably one or more of the following: propionic acid, butyric acid, valeric acid, hexanoic acid, heptanoic acid, octanoic acid, nonanoic acid, decanoic acid and undecanoic acid. The metal catalyst may also be a salt of alkali metals and/or a salt of alkaline earth metals as described in EPA0100129, preferably one or more of the following: aliphatic, cycloaliphatic or aromatic mono-carboxylic and poly-carboxylic acid having 2-20 carbon atoms with sodium benzoate or potassium benzoate. The metal catalyst may also be alkali metal phenolates known in GB1391066A and GB1386399A, preferably one or more of the following: sodium phenolates and potassium phenolates. The metal catalyst can also be those known in GB 809809, preferably one or more of the following: alkali metal oxides, alkaline earth metal oxides, alkali metal hydroxides, alkaline earth metal hydroxides, alkali metal carbonates, alkaline earth metal carbonates, alkali metal alkoxides, alkaline earth metal alkoxides, alkali metal phenolates, alkaline earth metal phenolates, alkali metal salts of alkylenatable compounds, metal salts of weak aliphatic carboxylic acids, metal salts of alicyclic carboxylic acids, basic alkali metal compounds complexed with crown ethers, and basic alkali metal compounds complexed with polyether alcohols. The metal catalyst may also be potassium salts of pyrrolidones known from EPA0033581. The metal catalyst can also be monocyclic or polycyclic complexes of titanium, zirconium and/or hafnium known in EPA2883895, preferably one or more of the following: zirconium tetra-n-butyrate, zirconium tetra-2-ethylhexanoate and zirconium tetra-2-ethylhexanoate. The metal catalyst can also be tin compounds of the type described in European Polymer Journal, 16, 1979, 147-148, preferably one or more of the following: dibutyltin dichloride, diphenyltin dichloride, triphenyltin alkanolate, tributyltin acetate, tributyltin oxide, tin octoate, dibutyl(dimethoxy)stannane, and tributyltin imidazol.

The metal salt of weak aliphatic carboxylic acids and the metal salt of the alicyclic carboxylic acids are each independently preferably one or more of the following: sodium methanolate, sodium acetate, potassium acetate, sodium acetoacetate, lead 2-ethylhexanoate and lead naphthenates.

The basic alkali metal compound complexed with crown ethers and the basic alkali metal compound complexed with polyether alcohols are each independently preferably one or more of the following: complexed sodium or potassium carboxylates, which can be known from EPA0056158 and EPA0056159.

When the system comprises a metal catalyst, a terminator is needed to be used after the reaction of the system is completed. In addition, the above-mentioned phosphoric catalysts, sulfonic catalysts and derivatives thereof can be used here as the terminator. In addition to these two catalysts, other inorganic acids such as hydrochloric acid, phosphorous acid, acid chlorides such as acetyl chloride, benzoyl chloride or isophthaloyl dichloride can also be used as the terminator.

The amount of the catalyst is preferably 0% by weight to 0.02% by weight, relative to the total weight of the system.

Solvent

The system may further comprise a solvent which is inert to isocyanate groups. The solvent may be those already known, preferably one or more of the following: ethyl acetate, butyl acetate, ethylene glycol monomethyl- or -ethyl ether acetate, 1-methoxypropyl-2-acetate, 2-butanone, 4-methyl-2-pentanone, cyclohexanone, toluene, propylene glycol diacetate, diethylene glycol dimethyl ether, diethylene glycol diacetate, butyl ether acetate, N-methylpyrrolidone and N-methylcaprolactam. The amount of the solvent is preferably 0% by weight to 10% by weight, relative to the total weight of the system.

Process for preparing the polyether-modified polyisocyanate

Preferably, the component b) polyoxyalkylene monoether alcohol is bonded to the component a) polyisocyanate via a urethane group.

A possible excess of component a) polyisocyanate with an isocyanate functionality of 2 to 4.5 in the system is present in the polyether-modified polyisocyanate.

When used, the polyether-modified polyisocyanate can be mixed with an isocyanate different from the polyether-modified polyisocyanate of the present invention, for example, a non-modified isocyanate.

An isocyanate different from the polyether-modified polyisocyanate

The component B may further comprise an isocyanate different from the polyether-modified polyisocyanate.

The isocyanate different from the polyether-modified polyisocyanate is preferably a non-modified isocyanate.

The isocyanate different from the polyether-modified polyisocyanate is preferably one or more of the following: aliphatic isocyanate trimers, aliphatic isocyanate uretdiones, aliphatic allophanates and aliphatic isocyanate biurets.

The amount of the isocyanate different from the polyether-modified polyisocyanate is preferably 0% by weight to 30% by weight, more preferably 0% by weight to 20% by weight, more preferably 0% by weight to 10% by weight, based on the total weight of the component B.

When the component B comprises an isocyanate different from the polyether-modified polyisocyanate, the average isocyanate functionality of the component B is calculated as follows:

$$f = NCC)\% * 4200 / Mn$$

f: average isocyanate functionality of the component B

Mn: number-average molecular weight of the isocyanate different from the polyether-modified polyisocyanate

Additive in the two-component coating composition

The two-component coating composition preferably further comprises an additive and/or auxiliary agent. The additive or auxiliary agent is preferably one or more of the following: wetting agents, dispersing agents, matting agents, defoamers, film-forming agent, thickeners, elasticators, pigments, leveling agents and other additives or auxiliary agents known to those skilled in the art that can be added to the two-component coating composition.

The film-forming agent is preferably one or more of the following: dipropylene glycol methyl ether (DPM), dipropylene glycol n-butyl ether (DPnB), ethylene glycol butyl ether (BG) and propylene glycol butyl ether (PnB).

The amount of the film-forming agent is preferably 0% by weight to 10% by weight, more preferably 0% by weight to 5% by weight, and most preferably 0% by weight to 3% by weight, relative to the total weight of the component A.

The amount of the additive or auxiliary agent may be an amount known to those skilled in the art that can be added.

The additive or auxiliary agent may optionally be included in the component A and/or the component B, or may be stored separately and added when used to prepare the two-component coating composition.

Use

Substrate

The coating is preferably used to protect floors, walls, furniture surfaces or surfaces of metal containers or other surfaces requiring protection. The substrate may be pretreated, preferably sanded or coated. The substrate may be artificial stones, woods, artificial woods, marbles, terrazzos, ceramics, linoleums, metals, mineral materials, plastics, rubbers, concretes, composite sheets, boards, papers, leathers or glasses.

Coating method

The temperature for curing and drying is preferably $25 \pm 2°C$, and the humidity is preferably $60 \pm 10\%$.

The application may be carried out by a method well known to those skilled in the art, such as knife coating, dip coating, brush coating, roller coating, spray coating or curtain coating.

Coated product

The coated product is preferably a building wall, a furniture surface, a floor or a metal surface. The coating is preferably carried out by roll coating known to those skilled in the art. The coating may be monolayered or multilayered. The two-component coating composition of the present invention has the advantage of being easy to clean, and can establish a barrier between the surface of the protected substrate and the contamination, so that the contamination can be easily removed. The two-component coating composition of the present invention has a matte effect and can be applied to various occasions.

**Examples**

Unless otherwise defined, all technical and scientific terms used herein have the same meaning as commonly understood by one of ordinary skill in the art to which this invention belongs. When the definitions of terms in this specification conflict with the meanings commonly understood by those skilled in the art to which the invention belongs, the definitions set forth herein shall prevail.

All numerical values used in the specification and claims to express amounts of ingredients, reaction conditions, etc. are understood to be modified by the term "about", unless otherwise indicated. Accordingly, unless indicated to the contrary, the numerical parameters set forth herein are approximations that can vary depending upon the desired properties sought to be obtained.

As used in this specification, "a", "an" and "the" are intended to include "at least one" or "one or more", unless stated otherwise. For example, "a component" refers to one or more components, thus more than one component may be contemplated and may be employed or used in the practice of the described embodiments.

As used herein, "and/or" refers to one or all of the referred elements.

As used herein, "including" and "comprising" encompass instances where only the mentioned elements are present, as well as instances where there are other unmentioned elements in addition to the mentioned elements.

All percentages in the present invention are weight percentages, unless otherwise stated.

The analytical measurements of the present invention are all carried out at $23\pm2$ °C and a humidity of $50\pm5\%$, unless otherwise stated.

The isocyanate group (NCO) content is determined according to DIN-EN ISO 11909:2007-05, the measured data including free and potentially free NCO content.

The number-average molecular weight of isocyanates is determined according to DIN 55672-1:2016-03 by gel permeation chromatography using tetrahydrofuran as the mobile phase and against polystyrene standard at 23°C.

The number-average molecular weight of the polyoxyalkylene monoether alcohol is determined according to GBT 21863-2008 at 23°C by gel permeation chromatography using tetrahydrofuran as the mobile phase and against polyethylene glycol standard.

The amount of solids of the aqueous polyacrylic dispersion is determined according to DIN EN ISO 3251:2008-06 at a drying temperature of 120°C, a drying time of 1 hour, a test disk diameter of 75 mm and a test amount of $1\pm0.02$ g, and the results are represented in% by weight.

The viscosity is determined according to DIN EN ISO 3219:1994-10 at 23°C with a shear rate of 10 s$^{-1}$, wherein MV-DIN spindle is selected.

The hydroxyl content is tested according to DIN EN ISO 4629-2.

The color value is determined according to DIN-EN 1557:1997-03.

Easy cleaning test: Marks of at least 10 cm are drawn on the center of coatings by water-based whiteboard pens (red, blue and black) commonly used for writing on the blackboard. Then, the marks are wiped with a dry napkin back and forth for 5 times, with a wiping pressure of about 0.5 kg. The coatings are inspected with naked eyes. They are scored according to the residual degree of marks and recorded as 2 to 5 points, indicating the easy cleaning performance from poor to good in said order. A score of 4 or more points is regarded as qualified in the easy cleaning test. A score of 5 points means that there is totally no mark residue on the coating surface. A score of 4 points means that there is a very slight mark residue on the coating surface. A score of 3 points means that there is a significant mark residue on the coating surface. A score of 2 points means that there is a large amount of mark residue that is similar to that before wiping.

Film appearance test: The coating appearance is evaluated and scored by visual observation with naked eyes. They are scored as 2 to 5 points, indicating the film appearance from poor to good in said order. A score of 4 and more points is regarded as qualified. A score of 5 points means that the coating surface is smooth with no obvious graininess. A score of 4 points means the coating surface is smooth but slightly grainy. A score of 3 points means the coating surface is smooth with obvious graininess. A score of 2 points means the coating surface is rough with obvious graininess.

Gloss is measured according to GB/T 9754-1988 at 60°C. A gloss of less than 60 is regarded as qualified.

Pendulum hardness: A coating is prepared on glass using a film applicator (set to a film thickness of 120 $\mu$m). The hardness of the coating is measured using a BYK pendulum hardness tester. Pendulum hardness (7d) refers to the pendulum hardness after the coating has been stored for seven days. The higher is the pendulum hardness, the higher is the hardness of the coating formed by the coating composition. Pendulum hardness of greater than 80 is regarded as qualified.

**Raw materials and reagents**

Polyisocyanate 1: A four-necked flask equipped with a stirrer, a thermometer, a reflux cooling tube, a nitrogen inlet tube and a dropping funnel was set with nitrogen atmosphere inside. 850 g of Desmodur H were added and it was heat to 65°C with stirring. Then, 5.5 g of benzyltrimethylammonium hydroxide (a solution obtained by diluting with isobutanol to 5% by weight). 1.1g of di-n-butyl phosphate were added to stop the reaction, when the NCO content of the reaction solution reached 45.6% by weight. After removal of unreacted monomers using a thin film evaporator at 140°C and 0.05 mbar, hexamethylene diisocyanate trimer was obtained with 100% by weight of non-volatile ingredients, NCO functionality of 3.2, viscosity of 1200 mPa·s (23°C), NCO content of 23.0% by weight, hexamethylene diisocyanate (HDI) monomer content of 0.25% by weight.

Polyisocyanate 2: The process for preparing hexamethylene diisocyanate trimer 1 was used. The dibutyl phosphate was added to terminate the reaction, when the NCO content of the reaction solution reached 38% by weight. After removal of unreacted monomers using a thin film evaporator at 140°C and 0.05 mbar, hexamethylene diisocyanate trimer was obtained with 100% by weight of non-volatile ingredients, NCO functionality of 3.5, viscosity of 3000 mPa·s (23°C), NCO content of 21.7% by weight, hexamethylene diisocyanate (HDI) monomer content of 0.25% by weight.

Polyisocyanate 3: 2 g ofN,N-diethylurea as a stabilizer, 10 g of 1,3-butanediol as a co-catalyst and 3 g of tri-n-butylphosphine as a catalyst were added sequentially to 1000 g (5.95 mol) of Desmodur H at room temperature under dry nitrogen. Then, the mixture was heated to 60°C. After a reaction time of 4 hours, the NCO content of the reaction mixture was 40.4%, corresponding to a degree of oligomerization of 18.0%. 2.8 g (0.015 mol) of methyl p-toluenesulfonate were added to terminate the reaction. It was heated to 80°C for 1 hour. After thin-film distillation at a temperature of 130°C and a pressure of 0.15 mbar, hexamethylene diisocyanate uretdione was obtained , which had 100% by weight of non-volatile ingredients, NCO content of 21.4% by weight, NCO functionality of 2.5, monomeric HDI content of 0.07% by weight and viscosity of 185 mPa·s (23°C).

Desmodur H: hexamethylene diisocyanate, purchased from Covestro (China) Co., Ltd.

N,N -diethylurea: purchased from Sigma-Aldrich Shanghai Trading Co., Ltd. 1,3-butanediol: purchased from Sigma-Aldrich Shanghai Trading Co., Ltd. Benzyltrimethylammonium hydroxide: purchased from Sigma-Aldrich Shanghai Trading Co., Ltd.

Tri-n-butylphosphine: purchased from Sigma-Aldrich Shanghai Trading Co., Ltd. Isobutanol: purchased from Sigma-Aldrich Shanghai Trading Co., Ltd.

MPEG 200: polyoxyalkylene monoether alcohol with the oxyethylene groups accounting for 100% by weight of the oxyalkylene groups of the polyoxyalkylene monoether alcohol, number-average molecular weight of 200 g/mol and OH value of 280.5 mgKOH/g.

MPEG 350: polyoxyalkylene monoether alcohol with the oxyethylene groups accounting for 100% by weight of the oxyalkylene groups of the polyoxyalkylene monoether alcohol, number-average molecular weight of 350 g/mol and OH value of 160.3 mgKOH/g.

MPEG 500: polyoxyalkylene monoether alcohol with the oxyethylene groups accounting for 100% by weight of the oxyalkylene groups of the polyoxyalkylene monoether alcohol, number-average molecular weight of 500 g/mol and OH value of 112.2 mgKOH/g.

MPEG 750: polyoxyalkylene monoether alcohol with the oxyethylene groups accounting for 100% by weight of the oxyalkylene groups of the polyoxyalkylene monoether alcohol, number-average molecular weight of 750 g/mol and OH value of 74.8 mgKOH/g.

T01-A: polyoxyalkylene monoether alcohol with the oxyethylene groups accounting for 100% by weight of the oxyalkylene groups of the polyoxyalkylene monoether alcohol, number-average molecular weight of 800 g/mol and OH value of 70.1 mgKOH/g, the starting components being propylene oxide and n-butanol.

Dibutyl phosphate: available from Sigma-Aldrich Shanghai Trading Co., Ltd.

Airex 901W: defoamer, available from Evonik Specialty Chemicals (Shanghai) Co., Ltd. BYK022: defoamer, available from BYK Auxiliary (Shanghai) Co., Ltd.

BYK348: wetting agent, available from BYK Additives (Shanghai) Co., Ltd.

RM-8W: thickener, available from Dow Chemical (Shanghai) Co., Ltd.

DPM: dipropylene glycol methyl ether, available from Dow Chemical (Shanghai) Co., Ltd.

DPnB: dipropylene glycol n-butyl ether, available from Dow Chemical (Shanghai) Co., Ltd. Bayhydrol A 2546: aqueous hydroxyl-containing polyacrylic dispersion with non-volatile content of about 41% by weight, OH content (relative to solids) of about 4.8% by weight, weight-average molecular weight of about 270000, commercially available from Covestro Shanghai (Investment) Co., Ltd.

Bayhydrol A 242: aqueous hydroxyl-containing polyacrylic dispersion with non-volatile content of about 42% by weight, OH content (relative to solids) of about 4.0% by weight, weight-average molecular weight of about 36000, commercially available from Covestro Shanghai (Investment) Co., Ltd.

Bayhydrol A 2457: aqueous hydroxyl-containing polyacrylic dispersion with non-volatile content of about 40% by weight, OH content (relative to solids) of about 2.7% by weight, weight-average molecular weight of about 320000, commercially available from Covestro Shanghai (Investment) Co., Ltd.

Bayhydrol A 2846: aqueous hydroxyl-containing polyacrylic dispersion with non-volatile content of about 40% by weight, OH content (relative to solids) of about 1.5% by weight, weight-average molecular weight of about 140000, commercially available from Covestro Shanghai (Investment) Co., Ltd.

NeoCryl® XK-101: aqueous hydroxyl-containing polyacrylic dispersion with non-volatile content of about 40% by weight, OH content (relative to solids) of about 2.5% by weight, weight-average molecular weight of less than 50000, commercially available from Covestro Shanghai (Investment) Co., Ltd

NeoCryl® XK -102: aqueous hydroxyl-containing polyacrylic dispersion with non-volatile content of about 40% by weight, OH content (relative to solids) of about 1.5% by weight, weight-average molecular weight of about 70000, commercially available from Covestro Shanghai (Investment) Co., Ltd.

NeoCryl® XK-103: aqueous hydroxyl-containing polyacrylic dispersion with non-volatile content of about 45% by weight, OH content (relative to solids) of about 3.2% by weight, weight-average molecular weight of about 460000, commercially available from Covestro Shanghai (Investment) Co., Ltd.

NeoCryl® XK -110: aqueous hydroxyl-containing polyacrylic dispersion with non-volatile content of about 46.5% by weight, OH content (relative to solids) of about 2.5% by weight, weight-average molecular weight of about 90000, commercially available from Covestro Shanghai (Investment) Co., Ltd.

Polyether-modified polyisocyanate 1

270 g (1.4786 eq) of polyisocyanate 1 and 0.018 g (0.0001 mol) of dibutyl phosphate were added to a 500 ml flask with a dropping funnel and a nitrogen inlet, and stirred to obtain a solution. The solution was heated to 100°C, and 25.0 g (0.0714 eq) of MPEG 350 were added dropwise to the flask within 45 minutes to react, until the isocyanate group (NCO) content reached 20.09%. The heating was stopped to obtain the polyether-modified polyisocyanate 1, which was a colorless, transparent solution and had the following characteristic data:

Solid content: 100% by weight
NCO content, relative to the total weight of the polyether-modified polyisocyanate 1: 20.09% by weight
Viscosity (23°C) : 1328 mPa·s
Color value (Hazen): 13
Isocyanate functionality: 3.05
Number-average molecular weight (g/mol): 827 g/mol

The polyoxyalkylene monoether alcohol had a number-average molecular weight of 350 g/mol. The amount of polyoxyalkylene monoether structure was 8.5% by weight, relative to the total weight of the polyether-modified polyisocyanate 1. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 1.

Polyether-modified polyisocyanate 2

270 g (1.4786 eq) of polyisocyanate 1 and 0.021 g (0.0001 mol) of dibutyl phosphate were added to a flask with a dropping funnel and a nitrogen inlet, and stirred to obtain a solution. The solution was heated to 100°C, and 30.0 g (0.0857 eq) of MPEG 350 were added dropwise to the flask within 45 minutes to react, until the isocyanate group (NCO) content reached 19.7%. The heating was stopped to obtain the polyether-modified polyisocyanate 2, which was a colorless, transparent solution and had the following characteristic data:

Solid content: 100% by weight
NCO content, relative to the total weight of the polyether-modified polyisocyanate 2: 19.72% by weight
Viscosity (23°C): 1287 mPa·s
Color value (Hazen): 12
Isocyanate functionality: 3.01
Number-average molecular weight (g/mol): 829 g/mol

The polyoxyalkylene monoether alcohol had a number-average molecular weight of 350 g/mol. The amount of polyoxyalkylene monoether structure was 10% by weight, relative to the total weight of the polyether-modified polyisocyanate 2. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 2.

Polyether-modified polyisocyanate 3

270 g (1.4786 eq) of polyisocyanate 1 and 0.039 g (0.0002 mol) of dibutyl phosphate were added to a 500 ml flask with a dropping funnel and a nitrogen inlet, and stirred to obtain a solution. The solution was heated to 100°C, and 30.0 g (0.0600 eq) of MPEG 500 were added dropwise to the flask within 45 minutes to react, until the isocyanate group (NCO) content reached 19.96%. The heating was stopped to obtain the polyether-modified polyisocyanate 3, which was a colorless, transparent solution and had the following characteristic data:

Solid content: 100% by weight
NCO content, relative to the total weight of the polyether-modified polyisocyanate 3: 19.96% by weight
Viscosity (23°C): 1548 mPa·s
Color value (Hazen): 9
Isocyanate functionality: 3.07
Number-average molecular weight (g/mol): 847 g/mol

The polyoxyalkylene monoether alcohol had a number-average molecular weight of 500 g/mol. The amount of polyoxyalkylene monoether structure was 10% by weight, relative to the total weight of the polyether-modified polyisocyanate 3. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 3.

Polyether-modified polyisocyanate 4

189 g (1.4099 eq) of polyisocyanate 1, 81 g (0.4175 eq) of polyisocyanate 3 and 0.024 g (0.0001 mol) of dibutyl phosphate were added to a 500 ml flask with a dropping funnel and a nitrogen inlet, and stirred to obtain a solution. The solution was heated to 100°C, and 30.0 g (0.0857 eq) of MPEG 350 were added dropwise to the flask within 45 minutes to react, until the isocyanate group (NCO) content reached 19.40%. The heating was stopped to obtain the polyether-modified polyisocyanate 4, which was a colorless, transparent solution and had the following characteristic data:

Solid content: 100% by weight
NCO content, relative to the total weight of the polyether-modified polyisocyanate 4: 19.40% by weight
Viscosity (23°C): 709 mPa·s
Color value (Hazen): 21
Isocyanate functionality: 2.79
Number-average molecular weight (g/mol): 771 g/mol

The polyoxyalkylene monoether alcohol had a number-average molecular weight of 350 g/mol. The amount of polyoxyalkylene monoether structure was 10% by weight, relative to the total weight of the polyether-modified polyisocyanate 4. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 4.

Polyether-modified polyisocyanate 5

135 g (0.7496 eq) of polyisocyanate 1, 135 g (0.6959 eq) of polyisocyanate 3 and 0.024 g (0.0001 mol) of dibutyl phosphate were added to a 500 ml flask with a dropping funnel and a nitrogen inlet, and stirred to obtain a solution. The solution was heated to 100°C, and 30.0 g (0.0857 eq) of MPEG 350 were added dropwise to the flask within 45 minutes to react, until the isocyanate group (NCO) content reached 18.95%. The heating was stopped to obtain the polyether-modified polyisocyanate 5, which was a colorless, transparent solution and had the following characteristic data:

Solid content: 100% by weight
NCO content, relative to the total weight of the polyether-modified polyisocyanate 5: 18.95% by weight
Viscosity (23°C): 519 mPa·s
Color value (Hazen): 17
Isocyanate functionality: 2.65
Number-average molecular weight (g/mol): 758 g/mol

The polyoxyalkylene monoether alcohol had a number-average molecular weight of 350 g/mol. The amount of polyoxyalkylene monoether structure was 10% by weight, relative to the total weight of the polyether-modified polyisocyanate 5. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 5.

Polyether-modified polyisocyanate 6

270 g (1.4014 eq) of polyisocyanate 2 and 0.021 g (0.0001 mol) of dibutyl phosphate were added to a 500 ml flask with a dropping funnel and a nitrogen inlet, and stirred to obtain a solution. The solution was heated to 100°C, and 30.0 g (0.0857 eq) of MPEG 350 were added dropwise to the flask within 45 minutes to react, until the isocyanate group (NCO) content reached 18.39%. The heating was stopped to obtain the polyether-modified polyisocyanate 6, which was a colorless, transparent solution and had the following characteristic data:

Solid content: 100% by weight
NCO content, relative to the total weight of the polyether-modified polyisocyanate 6: 18.39% by weight
Viscosity (23°C): 3136 mPa·s
Color value (Hazen): 12
Isocyanate functionality: 3.29
Number-average molecular weight (g/mol): 958 g/mol

The polyoxyalkylene monoether alcohol had a number-average molecular weight of 350 g/mol. The amount of polyoxyalkylene monoether structure was 10% by weight, relative to the total weight of the polyether-modified polyisocyanate 6. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of the polyether-modified polyisocyanate 6.

Polyether-modified polyisocyanate 7

270 g (1.4786 eq) of polyisocyanate 1 and 0.021 g (0.0001 mol) of dibutyl phosphate were added to a 500 ml flask with a dropping funnel and a nitrogen inlet, and stirred to obtain a solution. The solution was heated to 100°C, and 27.2 g (0.0777 eq) of MPEG 350 and 2.83 g (0.0035 eq) of T01A were added dropwise to the flask within 45 minutes successively to react, until the isocyanate group (NCO) content reached 19.66%. The heating was stopped to obtain the polyether-modified polyisocyanate 7, which was a colorless, transparent solution and had the following characteristic data:

Solid content: 100% by weight
NCO content, relative to the total weight of the polyether-modified polyisocyanate 7: 19.96% by weight
Viscosity (23°C): 1325 mPa·s
Color value (Hazen): 6
Isocyanate functionality: 3.02
Number-average molecular weight (g/mol): 815 g/mol

The polyoxyalkylene monoether alcohol had a number-average molecular weight of 370 g/mol. The amount of polyoxyalkylene monoether structure was 10% by weight, relative to the total weight of the polyether-modified polyisocyanate 7. The oxyethylene groups of the polyoxyalkylene monoether alcohol accounted for 90.5% by weight of the oxyalkylene groups of the polyoxyalkylene monoether alcohol.

The content of isophorone diisocyanate trimer was 0% by weight, relative to the total weight of the polyether-modified polyisocyanate 7.

Comparative polyether-modified polyisocyanate 1

270 g (1.4786 eq) of polyisocyanate 1 and 0.013 g (0.0001 mol) of dibutyl phosphate were added to a 500 ml flask with a dropping funnel and a nitrogen inlet, and stirred to obtain a solution. The solution was heated to 100°C, and 18.8 g (0.0537 eq) of MPEG 350 were added dropwise to the flask within 45 minutes to react, until the isocyanate group (NCO) content reached 20.99%. The heating was stopped to obtain the comparative polyether-modified polyisocyanate 1, which was a colorless, transparent solution and had the following characteristic data:

Solid content: 100% by weight
NCO content, relative to the total weight of the comparative polyether-modified polyisocyanate 1: 20.99% by weight
Viscosity (23°C): 1236 mPa·s
Color value (Hazen): 4
Isocyanate functionality: 3.08
Number-average molecular weight (g/mol): 804 g/mol

The polyoxyalkylene monoether alcohol had a number-average molecular weight of 350 g/mol. The amount of polyoxyalkylene monoether structure was 6.5% by weight, relative to the total weight of the comparative polyether-modified polyisocyanate 1. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of comparative polyether-modified polyisocyanate 1.

Comparative polyether-modified polyisocyanate 2

220 g (1.2079 eq) of polyisocyanate 1 and 0.021 g (0.0001 mol) of dibutyl phosphate were added to a 500 ml flask with a dropping funnel and a nitrogen inlet, and stirred to obtain a solution. The solution was heated to 100°C, and 30 g (0.0857 eq) of MPEG 350 were added dropwise to the flask within 45 minutes to react, until the isocyanate group (NCO) content reached 18.80%. The heating was stopped to obtain the comparative polyether-modified polyisocyanate 2, which was a colorless, transparent solution and had the following characteristic data:

Solid content: 100% by weight
NCO content, relative to the total weight of the comparative polyether-modified polyisocyanate 2: 18.80% by weight
Viscosity (23°C): 1280 mPa·s
Color value (Hazen): 10
Isocyanate functionality: 2.43
Number-average molecular weight (g/mol): 857 g/mol

The polyoxyalkylene monoether alcohol had a number-average molecular weight of 350 g/mol. The amount of polyoxyalkylene monoether structure was 12% by weight, relative to the total weight of the comparative polyether-modified polyisocyanate 2. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of comparative polyether-modified polyisocyanate 2.

Comparative polyether-modified polyisocyanate 3

220 g (1.3054 eq) of polyisocyanate 1 and 0.1 g (0.0005 mol) of dibutyl phosphate were added to a 500 ml flask with a dropping funnel and a nitrogen inlet, and stirred to obtain a solution. The solution was heated to 100°C, and 26 g (0.1308 eq) of MPEG 200 were added dropwise to the flask within 45 minutes to react, until the isocyanate group (NCO) content reached 18.95%. The heating was stopped to obtain the comparative polyether-modified polyisocyanate 3, which was a colorless, transparent solution and had the following characteristic data:

Solid content: 100% by weight
NCO content, relative to the total weight of the comparative polyether-modified polyisocyanate 3: 18.95% by weight
Viscosity (23°C): 1613 mPa·s
Color value (Hazen): 9
Isocyanate functionality: 2.88
Number-average molecular weight (g/mol): 812 g/mol

The polyoxyalkylene monoether alcohol had a number-average molecular weight of 200 g/mol. The amount of polyoxyalkylene monoether structure was 10% by weight, relative to the total weight of the comparative polyether-modified polyisocyanate 3. The oxyethylene groups of the polyoxyalkylene monoether alcohol accounted for 100% by weight of the oxyalkylene groups of the polyoxyalkylene monoether alcohol.

The content of isophorone diisocyanate trimer was 0% by weight, relative to the total weight of comparative polyether-modified polyisocyanate 3.

Comparative polvether-modified polyisocyanate 4

270 g (1.4786 eq) of polyisocyanate 1 and 0.051 g (0.0002 mol) of dibutyl phosphate were added to a 500 ml flask with a dropping funnel and a nitrogen inlet, and stirred to obtain a solution. The solution was heated to 100°C, and 30 g (0.04 eq) of MPEG 750 were added dropwise to the flask within 45 minutes to react, until the isocyanate group (NCO) content reached 20.30%. The heating was stopped to obtain the comparative polyether-modified polyisocyanate 4, which was a colorless, transparent solution and had the following characteristic data:

Solid content: 100% by weight
NCO content, relative to the total weight of the comparative polyether-modified polyisocyanate 4: 20.30% by weight
Viscosity (23°C): 1134 mPa·s
Color value (Hazen): 3
Isocyanate functionality: 3.11
Number-average molecular weight (g/mol): 805 g/mol

The polyoxyalkylene monoether alcohol had a number-average molecular weight of 750 g/mol. The amount of polyoxyalkylene monoether structure was 10% by weight, relative to the total weight of the comparative polyether-modified polyisocyanate 4. The oxyethylene groups of the polyoxyalkylene monoether alcohol accounted for 100% by weight of the oxyalkylene groups of the polyoxyalkylene monoether alcohol.
The content of isophorone diisocyanate trimer was 0% by weight, relative to the total weight of comparative polyether-modified polyisocyanate 4.

Compare polyether-modified polvisocvanates 5

81 g (0.4497 eq) of polyisocyanate 1, 189 g (0.9743 eq) of polyisocyanate 3 and 0.024 g (0.0001 mol) of dibutyl phosphate were added to a 500 ml flask with a dropping funnel and a nitrogen inlet, and stirred to obtain a solution. The solution was heated to 100°C, and 30 g (0.0857 eq) of MPEG 350 were added dropwise to the flask within 45 minutes to react, until the isocyanate group (NCO) content reached 18.72%. The heating was stopped to obtain the comparative polyether-modified polyisocyanate 5, which was a colorless, transparent solution and had the following characteristic data:

Solid content: 100% by weight
NCO content, relative to the total weight of the comparative polyether-modified polyisocyanate 5: 18.72% by weight
Viscosity (23°C): 396 mPa·s
Color value (Hazen): 28
Isocyanate functionality: 2.53
Number-average molecular weight (g/mol): 723 g/mol

The polyoxyalkylene monoether alcohol had a number-average molecular weight of 350 g/mol. The amount of polyoxyalkylene monoether structure was 10% by weight, relative to the total weight of the comparative polyether-modified polyisocyanate 5. The oxyethylene groups of the polyoxyalkylene monoether alcohol accounted for 100% by weight of the oxyalkylene groups of the polyoxyalkylene monoether alcohol.
The content of isophorone diisocyanate trimer was 0% by weight, relative to the total weight of comparative polyether-modified polyisocyanate 5.

Comparison of polyether-modified polyisocyanates 6

270 g (1.4786 eq) of polyisocyanate 1 and 0.021 g (0.0001 mol) of dibutyl phosphate were added to a 500 ml flask with a dropping funnel and a nitrogen inlet, and stirred to obtain a solution. The solution was heated to 100°C, and 22.8 g (0.0652 eq) of MPEG 350 and 7.82 g (0.0098 eq) of T01A were added dropwise to the flask within 45 minutes successively to react, until the isocyanate group (NCO) content reached 19.84%. The heating was stopped to obtain the comparative polyether-modified polyisocyanate 6, which was a colorless, transparent solution and had the following characteristic data:

Solid content: 100% by weight
NCO content, relative to the total weight of the comparative polyether-modified polyisocyanate 6: 19.84% by weight
Viscosity (23°C): 1343 mPa·s

Color value (Hazen): 7
Isocyanate functionality: 3.04
Number-average molecular weight (g/mol): 758 g/mol

The polyoxyalkylene monoether alcohol had a number-average molecular weight of 409 g/mol. The amount of polyoxyalkylene monoether structure was 10% by weight, relative to the total weight of the comparative polyether-modified polyisocyanate 6. The oxyethylene groups of the polyoxyalkylene monoether alcohol accounted for 74.5% by weight of the oxyalkylene groups of the polyoxyalkylene monoether alcohol.

The content of isophorone diisocyanate trimer was 0% by weight, relative to the total weight of comparative polyether-modified polyisocyanate 6.

Process for preparing the two-component coating composition

The ingredients and contents thereof of the component A and the component B are shown in Table 1 and Table 2. The ingredients of the component A were mixed at normal temperature to obtain the component A. The component A and the component B component were mixed at normal temperature to obtain the two-component coating composition.

Process for preparing the coating

The coating composition was applied onto the surface of a substrate with a 120 $\mu$m film applicator, and cured and dried at 23°C and 50% RH to obtain a coating.

Among them, transparent glass was selected as the substrate, and the coating was cured to determine the pendulum hardness and the easy cleaning performance. A black PC/ABS plastic plate was selected as the substrate, and the coating was cured to determine the film appearance and the gloss.

Examples 1-26 and Comparative Examples 1-13

Table 1 shows the components of the compositions of Examples 1-7 and Comparative Examples 1-6, and the performance test results of the compositions and coatings thereof. Table 2 shows the components of the compositions of Examples 8-11 and Comparative Examples 7-9, and the performance test results of the compositions and coatings thereof.

Table 1 Components of the compositions of Examples 1-7 and Comparative Examples 1-6 and test results thereof

| Components of the two-component coating compositions | Ex. 1 | Ex. 2 | Ex. 3 | Ex. 4 | Ex. 5 | Ex. 6 | Ex. 7 |
|---|---|---|---|---|---|---|---|
| Component A | | | | | | | |
| Bayhydrol A 2546 / g | 80 | 80 | 80 | 80 | 80 | 80 | 80 |
| Airex 901W/g | 0.15 | 0.15 | 0.15 | 0.15 | 0.15 | 0.15 | 0.15 |
| BYK 022 / g | 0.2 | 0.2 | 0.2 | 0.2 | 0.2 | 0.2 | 0.2 |
| BYK 348 / g | 0.3 | 0.3 | 0.3 | 0.3 | 0.3 | 0.3 | 0.3 |
| RM-8W / g | 0.65 | 0.65 | 0.65 | 0.65 | 0.65 | 0.65 | 0.65 |
| Deionized water/ g | 18.7 | 18.7 | 18.7 | 18.7 | 18.7 | 18.7 | 18.7 |
| Component B | | | | | | | |
| Polyether-modified poly isocyanate | 1 | 2 | 3 | 4 | 5 | 6 | 7 |
| NCO/NH (mol ratio) | 1.5 | 1.5 | 1.5 | 1.5 | 1.5 | 1.5 | 1.5 |
| Performance testing | | | | | | | |
| Easy cleaning | 4 | 5 | 5 | 4 | 4 | 4 | 5 |
| Film appearance | 5 | 5 | 5 | 5 | 5 | 5 | 5 |
| Pendulum hardness (7d) /s | 177 | 148 | 184 | 149 | 138 | 180 | 169 |

(continued)

| Performance testing | | | | | | | |
|---|---|---|---|---|---|---|---|
| Gloss / 60°C | 24 | 5.6 | 32.3 | 5.7 | 4.1 | 25.5 | 10.4 |
| Components of the two-component coating compositions | Comp. Ex. 1 | Comp. Ex. 2 | Comp. Ex. 3 | Comp. Ex. 4 | Comp. Ex. 5 | Comp. Ex. 6 | |
| Component A | | | | | | | |
| Bayhydrol A 2546 / g | 80 | 80 | 80 | 80 | 80 | 80 | |
| Airex 901W / g | 0.15 | 0.15 | 0.15 | 0.15 | 0.15 | 0.15 | |
| BYK 022 / g | 0.2 | 0.2 | 0.2 | 0.2 | 0.2 | 0.2 | |
| BYK 348 / g | 0.3 | 0.3 | 0.3 | 0.3 | 0.3 | 0.3 | |
| RM-8W / g | 0.65 | 0.65 | 0.65 | 0.65 | 0.65 | 0.65 | |
| Deionized water/ g | 18.7 | 18.7 | 18.7 | 18.7 | 18.7 | 18.7 | |
| Component B | | | | | | | |
| Polyether-modified polyisocyanate | Comp. 1 | Comp. 2 | Comp. 3 | Comp. 4 | Comp. 5 | Comp. 6 | |
| NCO/NH (mol ratio) | 1.5 | 1.5 | 1.5 | 1.5 | 1.5 | 1.5 | |
| Performance testing | | | | | | | |
| Easy cleaning | 3 | 5 | 2 | * | 3 | 2 | |
| Film appearance | 4 | 5 | 2 | * | 5 | 5 | |
| Pendulum hardness (7d) /s | 108 | 185 | 79 | * | 125 | 128 | |
| Gloss / 60°C | 7 | 74.4 | ** | * | 4.6 | 4.9 | |
| Remarks: * indicates that the compositions could not be dispersed and could not be tested for performance ** indicates that the surface was rough and uneven, no accurate data could be obtained. | | | | | | | |

The two-component coating compositions of Examples 1-7 had goody cleaning performance, good film appearance and pendulum hardness, and a matte effect. The component B of the two-component coating composition of Comparative Example 1 comprised the comparative polyether-modified polyisocyanate 1, which formed a coating that was not easy to clean. The component B of the two-component coating composition of Comparative Example 2 comprised the comparative polyether-modified polyisocyanate 2, and the coating formed by the two-component coating composition had a high gloss and was not matte. The component B of the two-component coating composition of Comparative Example 3 comprised the comparative polyether-modified polyisocyanate 3, and the coating formed by the two-component coating composition was regarded as unqualified in easy cleaning performance, film appearance, pendulum hardness and matte performance. The component B of the two-component coating composition of Comparative Example 4 comprised the comparative polyether-modified polyisocyanate 4, and the composition could not be dispersed and could not be tested for performance. The component B of the two-component coating composition of Comparative Example 5 comprised the comparative polyether-modified polyisocyanate 5, which formed a coating that was not easy to clean. The component B of the two-component coating composition of Comparative Example 6 comprised the comparative polyether-modified polyisocyanate 6, which formed a coating that was not easy to clean.

Table 2 Components of the compositions of Examples 8-11 and Comparative Examples 7-9 and test results thereof

| Components of the two-component coating compositions | Ex. 8 | Ex. 9 | Ex. 10 | Ex. 11 | Comp. Ex. 7 | Comp . Ex. 8 | Comp. Ex. 9 |
|---|---|---|---|---|---|---|---|
| Component A | | | | | | | |
| Aqueous poly acrylic dispersion/ g | NeoCryl ® XK-101 80g | NeoCryl ® XK-110 80g | Bayhydrol A 242 80g | Bayhy drol A 2457 80g | NeoCryl ® XK-102 80g | Bayhy drol A 2846 80g | NeoCryl ® XK-103 80g |
| DPM /g | 1.5 | 1.5 | 0 | 0 | 1.5 | 1.5 | 1.5 |
| DPnB /g | 1.5 | 1.5 | 0 | 0 | 1.5 | 1.5 | 1.5 |
| Airex 901W/g | 0.15 | 0.15 | 0.15 | 0.15 | 0.15 | 0.15 | 0.15 |
| BYK 022 /g | 0.2 | 0.2 | 0.2 | 0.2 | 0.2 | 0.2 | 0.2 |
| BYK 348 /g | 0.3 | 0.3 | 0.3 | 0.3 | 0.3 | 0.3 | 0.3 |
| RM-8W /g | 0.55 | 0.35 | 0.65 | 0.65 | 0.45 | 0.45 | 0.45 |
| Deionized water /g | 15.8 | 17.7 | 18.7 | 18.7 | 19.8 | 21.2 | 12.9 |
| Component B | | | | | | | |
| Polyethermodified polyisocyanat e | 2 | 2 | 2 | 2 | 2 | 2 | 2 |
| NCO/NH (mol ratio) | 1.5 | 1.5 | 1.5 | 1.5 | 1.5 | 1.5 | 1.5 |
| Performance testing | | | | | | | |
| Easy cleaning | 5 | 5 | 5 | 5 | 2 | 3 | 3 |
| Film appearance | 4 | 4 | 5 | 4 | 3 | 4 | 3 |
| Pendulum hardness (7d) /s | 111 | 132 | 117 | 143 | 96 | 96 | 105 |
| Gloss / 60°C | 41 | 57.4 | 48.6 | 39 | 20 | 17.7 | 8.1 |

The two-component coating compositions of Examples 8-11 had good ease cleaning performance, good film appearance and pendulum hardness, and a matte effect. The component A of the two-component coating composition of Comparative Example 7 comprised NeoCryl ® XK-102, which formed a coating that was not easy to clean and had poor film appearance. The component A of the two-component coating composition of Comparative Example 8 comprised Bayhydrol A 2846, which formed a coating that was not easy to clean. The component A of the two-component coating composition of Comparative Example 9 comprised NeoCryl® XK-103, which formed a coating that was not easy to clean and had poor film appearance.

It will be apparent to those skilled in the art that the present invention is not limited to the foregoing specific details, and that the present invention may be embodied in other specific forms without departing from the spirit or main characteristics of the present invention. The described embodiments are therefore to be regarded in all respects as illustrative and not restrictive, whereby the scope of the invention is to be indicated by the claims rather than the foregoing description; and therefore any changes should be regarded as belonging to the present invention, as long as it falls within the meaning and scope of the equivalents of claims.

**Claims**

1. A two-component coating composition, comprising a component A and a component B, wherein the component A comprises an aqueous hydroxyl-containing polyacrylic dispersion, the component B comprises a polyether-modified polyisocyanate, wherein the composition has a molar ratio of isocyanate groups and hydroxyl groups of 1.2:1 to 2:1; wherein the aqueous hydroxyl-containing polyacrylic dispersion has a hydroxyl content of greater than 2% by weight, relative to the total weight of solids of the aqueous hydroxyl-containing polyacrylic dispersion, and wherein the aqueous hydroxyl-containing polyacrylic dispersion has a weight-average molecular weight of not higher than 450000; wherein the polyether-modified polyisocyanate is obtained by the reaction of a system comprising the following components:

a) a polyisocyanate with an isocyanate functionality of 2 to 4.5, comprising at least 30% by weight of hexamethylene diisocyanate trimer, pentamethylene diisocyanate trimer or a combination thereof;
b) a polyoxyalkylene monoether alcohol; and
c) optionally a catalyst;

wherein the polyoxyalkylene monoether alcohol has a number-average molecular weight of 250 g/mol to 700 g/mol, and an oxyethylene group content of 75% by weight to 100% by weight, relative to the total weight of oxyalkylene groups of the polyoxyalkylene monoether alcohol; wherein the polyether-modified polyisocyanate has the following characteristics:

i) an average isocyanate functionality of 1.8 to 4.1;
ii) an isocyanate group content of 8% by weight to 21% by weight, relative to the total weight of the polyisocyanate; and
iii) a number-average molecular weight of 500 g/mol to 1200 g/mol;

wherein the component B has an amount of polyoxyalkylene monoether structure of greater than 6.5% by weight and less than 12% by weight, relative to the total weight of the component B.

2. The two-component coating composition according to claim 1, wherein the composition has a molar ratio of isocyanate groups and hydroxyl groups of 1.3:1 to 1.7:1.

3. The two-component coating composition according to claim 1 or 2, wherein the aqueous hydroxyl-containing polyacrylic dispersion has a hydroxyl content of greater than 2% by weight and not greater than 5% by weight, most preferably 2.5% by weight to 5% by weight, relative to the total weight of solids of the aqueous hydroxyl-containing polyacrylic dispersion.

4. The two-component coating composition according to any one of claims 1 to 3, wherein the aqueous hydroxyl-containing polyacrylic dispersion has a weight-average molecular weight of 30000 to 450000, most preferably 30000 to 350000, the weight-average molecular weight being determined according to GB/T 21863-2008 by gel permeation chromatography using DMF as the mobile phase and against polystyrene standard.

5. The two-component coating composition according to any one of claims 1 to 4, wherein the component B has an amount of polyoxyalkylene monoether structure of 7% by weight to 11% by weight, and most preferably 8% by weight to 11% by weight, relative to the total weight of the component B.

6. The two-component coating composition according to any one of claims 1 to 5, wherein the polyether-modified polyisocyanate further has one of the following characteristics:

iv) an amount of polyoxyalkylene monoether structure of greater than 6.5% by weight and less than 12% by weight, preferably 7% by weight to 11% by weight, most preferably 8% by weight to 11% by weight, relative to the total weight of the polyisocyanate; and
v) a content of isophorone diisocyanate trimer of not more than 0.5% by weight, relative to the total weight of the polyisocyanate.

7. The two-component coating composition according to any one of claims 1 to 6, wherein the component B further comprises an isocyanate different from the polyether-modified polyisocyanate, most preferably a non-modified isocyanate.

8. The two-component coating composition according to any one of claims 1 to 7, wherein the component a) polyisocyanate with an isocyanate functionality of 2 to 4.5 comprises an additional isocyanate, the additional isocyanate being one or more of the following: aliphatic isocyanate uretdiones and aliphatic isocyanate biurets.

9. The two-component coating composition according to claim 8, wherein the additional isocyanate is one or more of the following: hexamethylene diisocyanate uretdion, hexamethylene diisocyanate biuret and pentamethylene diisocyanate uretdione.

10. The two-component coating composition according to any one of claims 1 to 9, wherein the component b) polyoxyalkylene monoether alcohol has an oxyethylene group content of 80% by weight to 100% by weight, most preferably 90% by weight to 100% by weight, relative to the total weight of oxyalkylene groups of the polyoxyalkylene monoether alcohol.

11. The two-component coating composition according to any one of claims 1 to 10, wherein the component b) polyoxyalkylene monoether alcohol is in an amount of greater than 7% by weight and less than 11% by weight, most preferably 8 % by weight to 11% by weight, relative to the total weight of the system.

12. The two-component coating composition according to any one of claims 1 to 11, wherein the component b) polyoxyalkylene monoether alcohol has a number-average molecular weight of 250 g/mol to 600 g/mol, preferably 250 g/mol to 500 g/mol, most preferably 250 g/mol to 400 g/mol.

13. Use of the two-component coating composition according to any one of claims 1 to 12 for protecting a surface of a substrate or a coating on the surface of a substrate.

14. A coating method comprising the steps of: applying the two-component coating composition according to any one of claims 1 to 12 onto a surface of a substrate, and then curing and drying.

15. A coated product comprising a substrate and a coating formed by applying the two-component coating composition according to any one of claims 1 to 12 onto the substrate and then curing and drying, wherein the coated product is preferably selected from building walls, furniture surfaces, floors or metal surfaces.

Europäisches Patentamt
European Patent Office
Office européen des brevets

## EUROPEAN SEARCH REPORT

Application Number

EP 22 17 4393

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/115588 A1 (LUCAS FREDERIC [DE] ET AL) 16 April 2020 (2020-04-16) * comparative formulation 3 and inventive formulation 2; paragraph [0200] * | 1-15 | INV. C08G18/02 C08G18/28 C08G18/70 C08G18/73 C08G18/79 C09D175/04 C08G18/62 |
| X | EP 2 368 926 A1 (BASF SE [DE]) 28 September 2011 (2011-09-28) * inventive formulation 1; paragraph [0100] * | 1-15 | |
| X | WO 2009/141289 A1 (BASF SE [DE]; SCHAEFER HARALD [DE] ET AL.) 26 November 2009 (2009-11-26) * Comparative example V2 * * page 25, lines 1-6 * * page 26, lines 5-11 * | 1-15 | |
| X | US 5 252 696 A (LAAS HANS J [DE] ET AL) 12 October 1993 (1993-10-12) * examples 1,6,7 * | 1-15 | |
| X | DE 100 07 821 A1 (BAYER AG [DE]) 23 August 2001 (2001-08-23) * examples 2,7,12 * | 1-15 | TECHNICAL FIELDS SEARCHED (IPC) C08G C09D |
| X | US 6 426 414 B1 (LAAS HANS-JOSEF [DE] ET AL) 30 July 2002 (2002-07-30) * examples 1,2,8,9 * | 1-15 | |
| X | US 6 706 801 B1 (BLUM HARALD [DE] ET AL) 16 March 2004 (2004-03-16) * examples K,N * | 1-15 | |
| X | US 2012/101210 A1 (NENNEMANN ARNO [DE] ET AL) 26 April 2012 (2012-04-26) * Example 15, samples 5 and 6 * | 1-15 | |

-/--

The present search report has been drawn up for all claims

| Place of search | Date of completion of the search | Examiner |
|---|---|---|
| Munich | 17 October 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 22 17 4393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 045 485 A1 (WANHUA CHEMICAL GROUP CO LTD [CN] ET AL.) 20 July 2016 (2016-07-20) * examples 6,19; table 1 * | 1-15 | |
| E | EP 4 015 552 A1 (ASAHI CHEMICAL IND [JP]) 22 June 2022 (2022-06-22) * comparative example 4; paragraphs [0233], [0234], [0244]; examples 4-9; table 2 * | 1-15 | |
| X | EP 3 428 207 A1 (ASAHI CHEMICAL IND [JP]) 16 January 2019 (2019-01-16) * Comparative examples 1-5; paragraph [0190]; examples 4,5,15-19 * | 1-15 | |
| X | EP 3 517 559 A1 (ASAHI CHEMICAL IND [JP]) 31 July 2019 (2019-07-31) * comparative examples 3 and 4; examples 6-8,11-17; tables 2,3 * | 1-15 | |
| X | US 7 732 498 B2 (BAYER MATERIALSCIENCE AG [DE]) 8 June 2010 (2010-06-08) * column 7, lines 14-17; example 10 * | 1-15 | TECHNICAL FIELDS SEARCHED (IPC) |
| X | US 2009/234074 A1 (SEGAWA DAISUKE [JP] ET AL) 17 September 2009 (2009-09-17) * examples 1-3,5-10,12-17,19-21; tables 2-5 * | 1-15 | |

The present search report has been drawn up for all claims

| Place of search | Date of completion of the search | Examiner |
|---|---|---|
| Munich | 17 October 2022 | Lanz, Sandra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
### ON EUROPEAN PATENT APPLICATION NO.

**EP 22 17 4393**

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | | | Publication date | Patent family member(s) | | | Publication date |
|---|---|---|---|---|---|---|---|
| US 2020115588 | A1 | | 16-04-2020 | CN | 110072901 | A | 30-07-2019 |
| | | | | EP | 3555164 | A1 | 23-10-2019 |
| | | | | US | 2020115588 | A1 | 16-04-2020 |
| | | | | WO | 2018108631 | A1 | 21-06-2018 |
| EP 2368926 | A1 | | 28-09-2011 | CN | 102277081 | A | 14-12-2011 |
| | | | | EP | 2368926 | A1 | 28-09-2011 |
| WO 2009141289 | A1 | | 26-11-2009 | NONE | | | |
| US 5252696 | A | | 12-10-1993 | AT | 132515 | T | 15-01-1996 |
| | | | | DE | 4136618 | A1 | 13-05-1993 |
| | | | | EP | 0540985 | A1 | 12-05-1993 |
| | | | | ES | 2084242 | T3 | 01-05-1996 |
| | | | | JP | 2961475 | B2 | 12-10-1999 |
| | | | | JP | H05222150 | A | 31-08-1993 |
| | | | | KR | 930010074 | A | 22-06-1993 |
| | | | | US | 5252696 | A | 12-10-1993 |
| | | | | ZA | 928557 | B | 05-05-1993 |
| DE 10007821 | A1 | | 23-08-2001 | AU | 3171201 | A | 03-09-2001 |
| | | | | DE | 10007821 | A1 | 23-08-2001 |
| | | | | WO | 0162819 | A1 | 30-08-2001 |
| US 6426414 | B1 | | 30-07-2002 | AT | 252122 | T | 15-11-2003 |
| | | | | CA | 2272361 | A1 | 22-11-1999 |
| | | | | EP | 0959087 | A1 | 24-11-1999 |
| | | | | ES | 2209274 | T3 | 16-06-2004 |
| | | | | JP | 4331822 | B2 | 16-09-2009 |
| | | | | JP | H11349805 | A | 21-12-1999 |
| | | | | US | 6426414 | B1 | 30-07-2002 |
| US 6706801 | B1 | | 16-03-2004 | AT | 238365 | T | 15-05-2003 |
| | | | | AT | 249486 | T | 15-09-2003 |
| | | | | AU | 1972800 | A | 12-07-2000 |
| | | | | AU | 1973000 | A | 12-07-2000 |
| | | | | CN | 1331707 | A | 16-01-2002 |
| | | | | CN | 1331708 | A | 16-01-2002 |
| | | | | CZ | 20012260 | A3 | 12-09-2001 |
| | | | | CZ | 20012272 | A3 | 12-09-2001 |
| | | | | DK | 1144472 | T3 | 11-08-2003 |
| | | | | DK | 1144474 | T3 | 15-12-2003 |
| | | | | EP | 1144472 | A1 | 17-10-2001 |
| | | | | EP | 1144474 | A1 | 17-10-2001 |
| | | | | ES | 2198981 | T3 | 01-02-2004 |
| | | | | ES | 2207319 | T3 | 16-05-2004 |

EPO FORM P0459

For more details about this annex : see Official Journal of the European Patent Office, No. 12/82

**page 1 of 3**

## ANNEX TO THE EUROPEAN SEARCH REPORT
## ON EUROPEAN PATENT APPLICATION NO.

EP 22 17 4393

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | Publication date | Patent family member(s) | Publication date |
|---|---|---|---|
| | | HK 1043140 A1 | 06-09-2002 |
| | | HK 1043375 A1 | 13-09-2002 |
| | | HR P20010547 A2 | 31-08-2002 |
| | | HR P20010548 A2 | 31-08-2002 |
| | | HU 0104695 A2 | 28-03-2002 |
| | | HU 0200677 A2 | 29-06-2002 |
| | | PL 349447 A1 | 29-07-2002 |
| | | PL 358971 A1 | 23-08-2004 |
| | | PT 1144472 E | 30-09-2003 |
| | | PT 1144474 E | 27-02-2004 |
| | | SK 8412001 A3 | 06-11-2001 |
| | | SK 8422001 A3 | 03-12-2001 |
| | | TR 200101814 T2 | 21-12-2001 |
| | | TR 200101815 T2 | 21-11-2001 |
| | | TW 510916 B | 21-11-2002 |
| | | US 6562894 B1 | 13-05-2003 |
| | | US 6706801 B1 | 16-03-2004 |
| | | WO 0037519 A1 | 29-06-2000 |
| | | WO 0037523 A1 | 29-06-2000 |
| US 2012101210 A1 | 26-04-2012 | CN 102449014 A | 09-05-2012 |
| | | EP 2236531 A1 | 06-10-2010 |
| | | EP 2414415 A2 | 08-02-2012 |
| | | ES 2443074 T3 | 17-02-2014 |
| | | HK 1167414 A1 | 30-11-2012 |
| | | JP 5677407 B2 | 25-02-2015 |
| | | JP 2012522077 A | 20-09-2012 |
| | | KR 20110139758 A | 29-12-2011 |
| | | PL 2414415 T3 | 30-04-2014 |
| | | US 2012101210 A1 | 26-04-2012 |
| | | WO 2010112155 A2 | 07-10-2010 |
| EP 3045485 A1 | 20-07-2016 | CN 104448232 A | 25-03-2015 |
| | | EP 3045485 A1 | 20-07-2016 |
| | | ES 2783798 T3 | 18-09-2020 |
| | | US 2016280836 A1 | 29-09-2016 |
| | | WO 2015035673 A1 | 19-03-2015 |
| EP 4015552 A1 | 22-06-2022 | NONE | |
| EP 3428207 A1 | 16-01-2019 | CN 108699204 A | 23-10-2018 |
| | | EP 3428207 A1 | 16-01-2019 |
| | | JP 6568996 B2 | 28-08-2019 |
| | | JP WO2017154963 A1 | 13-12-2018 |
| | | WO 2017154963 A1 | 14-09-2017 |

EPO FORM P0459

For more details about this annex : see Official Journal of the European Patent Office, No. 12/82

page 2 of 3

## ANNEX TO THE EUROPEAN SEARCH REPORT
### ON EUROPEAN PATENT APPLICATION NO.

EP 22 17 4393

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2022

| Patent document cited in search report | | | Publication date | Patent family member(s) | | | Publication date |
|---|---|---|---|---|---|---|---|
| EP 3517559 | A1 | | 31-07-2019 | CN | 109790277 | A | 21-05-2019 |
| | | | | EP | 3517559 | A1 | 31-07-2019 |
| | | | | JP | 6633218 | B2 | 22-01-2020 |
| | | | | JP | WO2018056408 | A1 | 11-04-2019 |
| | | | | WO | 2018056408 | A1 | 29-03-2018 |
| US 7732498 | B2 | | 08-06-2010 | DE | 102006005165 | A1 | 09-08-2007 |
| | | | | EP | 1984302 | A1 | 29-10-2008 |
| | | | | JP | 2009525245 | A | 09-07-2009 |
| | | | | US | 2008004356 | A1 | 03-01-2008 |
| | | | | WO | 2007087988 | A1 | 09-08-2007 |
| US 2009234074 | A1 | | 17-09-2009 | CA | 2647971 | A1 | 13-09-2009 |
| | | | | JP | 5408888 | B2 | 05-02-2014 |
| | | | | JP | 2009221243 | A | 01-10-2009 |
| | | | | US | 2009234074 | A1 | 17-09-2009 |

EPO FORM P0459

For more details about this annex : see Official Journal of the European Patent Office, No. 12/82

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101585995 A
- US 7501472 B2
- CN 111057456 A
- GB 218632008 T
- GB 2221465 A
- GB 2222161 A
- GB 1391066 A
- GB 1386399 A
- GB 809809 A
- GB 97541988 T

**Non-patent literature cited in the description**

- *European Polymer Journal,* 1979, vol. 16, 147-148